(19) Europäisches Patentamt
European Patent Office
Office européen des brevets

(11) **EP 3 964 791 A1**

(12) **EUROPEAN PATENT APPLICATION**

(43) Date of publication:
**09.03.2022 Bulletin 2022/10**

(21) Application number: **20204202.4**

(22) Date of filing: **27.10.2020**

(51) International Patent Classification (IPC):
**G01B 11/06** (2006.01)   **G01B 9/04** (2006.01)
**G01B 11/24** (2006.01)

(52) Cooperative Patent Classification (CPC):
**G01B 11/0658; G01B 9/04; G01B 11/24**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.09.2020 PT 2020116691**

(71) Applicant: **INL - International Iberian Nanotechnology Laboratory**
**4715-330 Braga (PT)**

(72) Inventors:
• **BERIT NIEDER, Jana**
  **4700-381 BRAGA (PT)**
• **RIBEIRO ADÃO, Ricardo Miguel**
  **4710-403 BRAGA (PT)**
• **GHAELI, Ima**
  **4715-310 BRAGA (PT)**

(74) Representative: **Patentree**
**Edificio Net**
**Rua de Salazares, 842**
**4149-002 Porto (PT)**

(54) **METHOD AND DEVICE FOR MEASURING THICKNESS OF A FLUORESCENT LAYER**

(57)    Method for direct measurement of thickness or topography of a structure or layer in respect of a nearfield photoluminescence quenching layer, by using time-resolved photoluminescence microscopy lifetime imaging, for measuring quenching of photoluminescence lifetime caused by nonradiative energy transfer, from the photoluminescent layer, acting as an energy donor layer, to the quenching layer, acting as nonradiative energy acceptor layer, comprising the steps of:
illuminating a portion of a sample having a quenching layer and a photoluminescent layer with variable-thickness, with an excitation light source for obtaining photoluminescence emission,
measuring the photoluminescence emission for obtaining the time-resolved photoluminescence and determine the photoluminescence lifetime from the time-resolved photoluminescence;
determining the thickness of the photoluminescent layer from the determined photoluminescence lifetime.

Fig. 1

EP 3 964 791 A1

**Description**

**TECHNICAL FIELD**

The present disclosure relates to a contactless nano/microscale thickness and height profiling method based on nearfield nonradiative energy transfer effects. In particular, the present disclosure relates to a method of using nearfield energy transfer effects to obtain absolute measurement of an object; specifically, absolute thickness values of an object.

**BACKGROUND**

A near-field based method for nanoscopy referred to as Metal Induced Energy Transfer-Fluorescence Lifetime Imaging (MIET-FLIM) was originally developed by Chizhik et al. [1] and has been used as a precise nanorulerto map the distance between ultrathin fluorescently-labelled extended structures and its underlying metal surface with nanoscale resolution. The modification in the photoluminescence (PL) lifetime of an emitter depends on its nanoscale distance z from a functionalized non-radiative energy acceptor surface. For biological systems, MIET-FLIM can be used to determine the distance of extended membranes, such as the cellular membrane of epithelial cells or nuclear membranes, to a metallic substrate. The resulting information provides a 3D axial super-resolved image of the membrane. Interestingly, the axial resolution achieved with this technique using gold substrates reaches approximately 3-4 nm, allowing, for example, the identification of distinct lamina protein networks inside the nuclear membrane [2]. In a recent study, the resolution was further improved to below 1 nm using a graphene functionalized substrate instead of a thin gold layer. Graphene enabled nearfield sensing allows observing the molecular reaction of DNA hybridization with nanometer scale resolution [3].

In a recent study, an alternative MIET approach was developed where an AFM tip attached to a spherical gold mirror is used to scan at a fixed axial position above fluorophore-coated surfaces, allows resolving microfabricated steps of 14 nm. Nonetheless, characterizing the nanoscale topography, heights and thicknesses at the liquid/solid interfaces remains challenging.

These facts are disclosed in order to illustrate the technical problem addressed by the present disclosure.

**References**

1. A.I. Chizhik, J. Rother, I. Gregor, A. Janshoff, J. Enderlein, Metal-induced energy transfer for live cell nanoscopy, Nat. Photonics. 8 (2014) 124-127. doi:10.1038/nphoton.2013.345.

2. E. Figueiras, O.F. Silvestre, T.O. Ihalainen, J.B. Nieder, Phasor-assisted nanoscopy reveals differences in the spatial organization of major nuclear lamina proteins, Biochim. Biophys. Acta - Mol. Cell Res. (2019) 118530. doi:https://doi.org/10.1016/j.bbamcr.2019.118530.

3. R.R.M.A. and R.C. and E.F. and P.A. and J.B. Nieder, Graphene setting the stage: Tracking DNA hybridization with nanoscale resolution, 2D Mater. (2019). http://iopscience.iop.org/10.1088/2053-1583/ab41e0.

4. L. Gaudreau, K.J. Tielrooij, G.E.D.K. Prawiroatmodjo, J. Osmond, F.J.G. De Abajo, F.H.L. Koppens, F.J. Garcia de Abajo, F.H.L. Koppens, Universal distance-scaling of nonradiative energy transfer to graphene, Nano Lett. 13 (2013) 2030-2035. doi:10.1021/nl400176b.

**GENERAL DESCRIPTION**

The present disclosure relates to a contactless nearfield thickness and height profiling method based on nearfield nonradiative energy transfer effects for three dimensional objects on the micro- to nanoscale.

The method of the present disclosure is based on nearfield effects and uses time resolved photoluminescence detection to obtain the height of a luminescent material or a luminescent material-coated structure. It allows nano-meter axial accuracy, while at the same time it is fast and provides easy-to-obtain 3D maps of nano-/micro-topological surfaces.

The method of the present disclosure address challenges in current nano characterization methods by introducing a non-destructive contactless nanometrology technique.

In an embodiment, the present disclosure relates to a method of using a novel nearfield quenching effect to obtain absolute thickness measurement of an object.

In an embodiment, micro- and nanostructures were fabricated either through controlled nanofabrication techniques or via a natural process such as droplet evaporation. For the first time, a nearfield-based sensing technique has been used to obtain 3D micro-/nanotopologies of homogenously fluorescently labelled structures over lateral ranges of hundreds of micrometres with an axial thickness from 2000 nm to thin layers of about 20 nm.

In an embodiment, the present disclosure relates to a nearfield quenching method that allows conversion of determined photoluminescence (PL) lifetime values into micro-/nano-topologies of extended three dimensional (3D) architectures.

In an embodiment, assuming a homogenous distribution of fluorophores in the material studied, a superposition of fluorophores with distance-dependent photoluminescence lifetime and intensity values is considered. Fluorophores close to the interface are more quenched and experience a reduction in both lifetime and intensity.

In an embodiment, numerical calculations are performed to determine the thickness of the fluorescent material.

In an embodiment, the obtained topography is compared to standard contact profilometry results.

The method described in the present disclosure is considered a new alternative to current tip-scanning techniques.

As compared to the relative height information provided by contact profilometry or atomic force microscopy (AFM) techniques, the method of the present disclosure provides a tool for contact-less mapping of absolute thickness values (without the need for a reference). Further, given that it is a contactless technique, no damage to the sample occurs upon measurement and thus allows even delicate samples to be analysed non-invasively and kept intact.

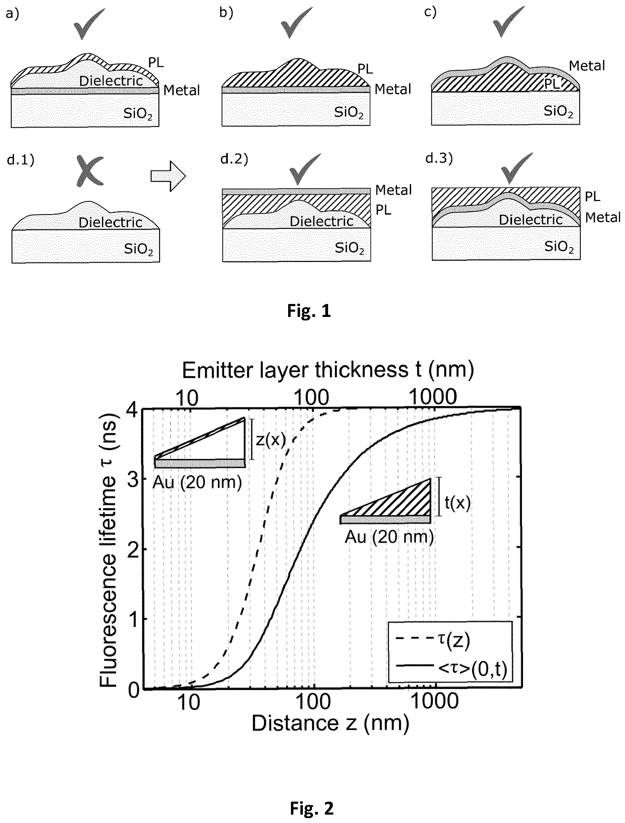

**Figure 1** depicts examples of different sample architectures. **Figure 1a** depicts an example where a dielectric material on top of a nonradiative energy acceptor layer is covered by a photoluminescent (PL) thin film. Photoluminescence comprises, for example, fluorescence and phosphorescence relaxation processes. This configuration can be described using state-of the-art MIET-FLIM technique, which is only applicable in case of an ultrathin photoluminescent layer thickness of <10 nm or a value similar to the axial resolution. However, the method of the present disclosure additionally allows studying of the height and topology of axially extended photoluminescent layers located on top of a (quasi-) metal thin film for example gold as depicted in **Figure 1b,** or coated by a gold film as depicted in **Figure 1c.** It is a minimum requirement of the method of the present disclosure that the sample contains at least a (quasi-) metal layer (e.g. gold) and at least a photoluminescent layer. Thus, samples consisting of a dielectric material on top of a non-metal substrate as depicted in **Figure 1d.1** cannot be directly analysed using the method of the present disclosure.

In an embodiment, modification may be made on samples of the type shown in **Figure 1d.1** in order to achieve compatibility with the method of the present disclosure. One possibility is to cover the dielectric structure with a photoluminescent layer, followed by a (quasi-) metal deposition, as depicted in **Figure 1d.2,** using gold. This approach is particularly interesting as a mid-fabrication step. The solubility of the photoluminescent layer can be designed so as to enable the nonradiative energy acceptor layer to be lifted off after analysis of the structure height and topography is performed, thus making it a temporary sample modification. This is advantageous because it is temporary even if limited to the specific cases where the photoluminescent layer can be removed without disturbing the main underlying dielectric structure. If the added photoluminescent layer reaches the substrate, one has prior knowledge of its maximum (overall) thickness, and it does not exceed the maximum measurable distance, the obtained information can be used to obtain absolute thickness values of the dielectric material. Otherwise, the information can still be used to obtain relative topographic variations in the dielectric material, but not necessarily its absolute thickness.

In another embodiment, the metal-coated dielectric structure of interest is coated with a nonradiative energy acceptor thin-film, followed by PL coverage, as shown in **Figure 1d.3.** In this case, the photoluminescent layer can be easily flattened e.g. by covering the sample with a glass coverslip and applying pressure during the photoluminescent layer drying. Again, If the added photoluminescent layer reaches the substrate, one has prior knowledge of its maximum (overall) thickness, and it does not exceed the maximum measurable distance, the obtained information can be used to obtain absolute thickness values of the dielectric material. Otherwise, the information can still be used to obtain relative topographic variations in the dielectric material, but not necessarily its absolute thickness.

The quenching layer is a layer that is able to quench photoluminescence. Quenching here refers to the nearfield based photoluminescence lifetime decay rate as the result of non-radiative energy transfer in close proximity of a quenching layer. The photoluminescent layer is illuminated with an excitation source and the photoluminescent lifetime is obtained from the photoluminescent emission. Applying numerical calculations, the photoluminescent lifetime is converted to the distance value, and the photoluminescent layer absolute thickness is obtained.

The present disclosure relates to a method for direct measurement of thickness or topography of a structure or layer in respect of a nearfield photoluminescence quenching layer, by using time-resolved photoluminescence microscopy lifetime imaging, for measuring quenching of photoluminescence lifetime caused by nonradiative energy transfer, from the photoluminescent layer, acting as an energy donor layer, to the quenching layer, acting as nonradiative energy acceptor layer, comprising the steps of:

illuminating a portion of a sample having a quenching layer and a photoluminescent layer with variable-thickness, with an excitation light source for obtaining photoluminescence emission,

measuring the photoluminescence emission for obtaining the time-resolved photoluminescence and determine the photoluminescence lifetime from the time-resolved photoluminescence;
determining the thickness of the photoluminescent layer from the determined photoluminescence lifetime.

In an embodiment, the time-resolved photoluminescence microscopy lifetime is fluorescence lifetime imaging microscopy or phosphorescence lifetime imaging microscopy.
In an embodiment, the thickness of the photoluminescent layer is determined by:

$$\langle \tau \rangle (t) = \frac{\int_0^t \Phi_{eff}(z)\,dz}{\int_0^t \Phi_{eff}(z)/\tau(z)\,dz}$$

wherein t is the thickness of the photoluminescent layer to be determined, z is a thickness-axis distance across the photoluminescent layer, $\langle \tau \rangle (t)$ is the obtained photoluminescence lifetime from the measured photoluminescence emission, $\tau(z)$ is the photoluminescence lifetime as a function of z for a thin photoluminescent layer and $\Phi_{eff}(z)$ is the effective quantum-yield as a function of z.
In an embodiment, the effective quantum-yield $\Phi_{eff}(z)$ is obtained by:

$$\Phi_{eff}(z) = \Phi_0 \frac{\tau(z)}{\tau_0}$$

wherein, $\Phi_0$ is the free-space quantum yield of the emitters, and $\tau_0$ is the free-space photoluminescent lifetime of the emitters.
In an embodiment, measuring of the photoluminescence emission is carried out in single-point, image scanning or widefield collection by time-domain measurement or time-gated measurement or frequency-domain measurement such as homodyne detection.
In an embodiment, the time-correlated single-photon counting is carried out using an avalanche photodiode detector or a photomultiplier tube for photon counting, or an intensified CCD camera for widefield measurement.
In an embodiment, the method comprises a preceding step of providing the sample with the quenching layer and the photoluminescent layer with variable-thickness.
In an embodiment, measuring of the photoluminescence emission for obtaining the photoluminescence lifetime is carried out at a single point on the sample, for determining the thickness of the photoluminescent layer on the single point.
In an embodiment, measuring of the photoluminescence emission for obtaining the photoluminescence lifetime is carried out at a scanning line along the sample, for determining the thickness of the photoluminescent layer along the scanning line.
In an embodiment, measuring of the photoluminescence emission for obtaining the photoluminescence lifetime is carried out on a scanning area of the sample, for determining the thickness of the photoluminescent layer within the scanning area.
In an embodiment, measuring of the photoluminescence emission for obtaining the photoluminescence lifetime is carried out on a widefield area on the sample, for determining the thickness of the photoluminescent layer on that widefield area.
In an embodiment, the photoluminescence lifetime is obtained by decay characterization by multi-exponential curve-fitting of a time-domain signal of the measured photoluminescence emission.
In an embodiment, the photoluminescence lifetime is obtained by method of phasors, by Fast Fourier Transform, or by using a threshold.
In an embodiment, the method is preceded by an instrument response function deconvolution step, wherein the instrument is used to measure the photoluminescence emission.
In an embodiment, the method comprises the step of adding photoluminescence properties to the structure of which the thickness is to be measured.
In an embodiment, the photoluminescent layer comprises a photoluminescent emitter, chromophore, quantum dot, perovskite, or light-emitting nanostructure.
In an embodiment, the method comprises the preceding step of depositing a quenching layer on a photoluminescent layer.
In an embodiment, the photoluminescent layer further comprises micro or nanostructures.
In an embodiment, the micro or nanostructures are fabricated by nanofabrication, nanoimprinting, nano-coating, or inkjet printing.

In an embodiment, the quenching layer is a metal, a conductive two-dimensional material, transparent conductive oxides, metal metastructures, metal alloys, ceramic based metamaterials, or combinations thereof.

In an embodiment, the quenching layer is a metal quenching layer wherein the metal is gold, silver, aluminium or copper.

In an embodiment, the quenching layer is a conductive two-dimensional material quenching layer wherein the conductive two-dimensional material is graphene or tungsten diselenide.

In an embodiment, the quenching layer is a transparent conductive oxide quenching layer wherein the transparent conductive oxide is aluminium-doped zinc oxide, indium tin oxide or fluorine doped tin oxide.

In an embodiment, the quenching layer is a ceramic based metamaterial quenching layer wherein the ceramic based metamaterial is titanium carbide or titanium nitride.

In an embodiment, the method is for indirect measurement of the topography of a non-luminescent dielectric layer comprising the steps of:

> depositing a variable-thickness photoluminescent layer, followed by a quenching layer, onto the non-luminescent dielectric layer;
> wherein the quencher layer forms a flat surface on top of the photoluminescent layer;
> measuring the thickness of the photoluminescent layer in respect of the quenching layer;
> obtaining the topography of the non-luminescent dielectric layer using the measured thickness of the photoluminescent layer.

In an embodiment, the method is for indirect measurement of the thickness of a non-luminescent dielectric layer comprising the steps of:

> depositing a variable-thickness photoluminescent layer, followed by a quenching layer, onto the non-luminescent dielectric layer;
> wherein the quencher layer forms a flat surface on top of the photoluminescent layer;
> measuring the thickness of the photoluminescent layer in respect of the quenching layer;
> obtaining the thickness of the non-luminescent dielectric layer by subtracting the measured thickness of the photoluminescent layer from a total thickness comprising the photoluminescent layer and the non-photoluminescent dielectric layer.

In an embodiment, the method is for indirect measurement of topography of a non-luminescent dielectric layer comprising the steps of:

> depositing a quenching layer followed by a variable-thickness photoluminescent layer, onto the non-luminescent dielectric layer;
> wherein the photoluminescent layer forms a flat surface on top of the quenching layer;
> measuring the thickness of the photoluminescent layer in respect of the quenching layer;
> obtaining the topography of the non-luminescent dielectric layer using the measured thickness of the photoluminescent layer.

In an embodiment, the method is for indirect measurement of thickness of a non-luminescent dielectric layer comprising the steps of:

> depositing a quenching layer followed by a variable-thickness photoluminescent layer, onto the non-luminescent dielectric layer;
> wherein the photoluminescent layer forms a flat surface on top of the quenching layer;
> measuring the thickness of the photoluminescent layer in respect of the quenching layer;
> obtaining the thickness of the non-luminescent dielectric layer by subtracting the measured thickness of the photoluminescent layer and the quenching layer thickness from a total thickness comprising the photoluminescent layer and the non-luminescent dielectric layer.

In an embodiment, the excitation light source is a pulsed or intensity modulated light source.

In an embodiment, the excitation light source is a laser or a light emitting diode or an excitation lamp.

An aspect of the present disclosure relates to a device comprising an electronic data processor and non-transitory storage media comprising computer program instructions for implementing a method for obtaining a direct measurement of thickness of a photoluminescent layer in respect of a quenching layer, by using photoluminescence microscopy lifetime imaging, for measuring quenching of photoluminescence lifetime caused by nonradiative energy transfer, from the photoluminescent layer, acting as an energy donor layer, to the quenching layer, acting as nonradiative energy acceptor layer, the computer program instructions including instructions which, when executed by the processor, cause the processor to carry out the steps of:

collecting a synchronisation signal from an excitation light source for illuminating the sample for obtaining photoluminescence emission,
measuring the synchronized photoluminescence emission for obtaining the time-resolved photoluminescence and determine the photoluminescence lifetime from the time-resolved photoluminescence;
determining the thickness of the photoluminescent layer from the determined photoluminescence lifetime.

## BRIEF DESCRIPTION OF THE DRAWINGS

The following figures provide preferred embodiments for illustrating the disclosure and should not be seen as limiting the scope of invention.

**Figure 1** shows example architectures. **Figure 1a** shows a dielectric structure on top of a metal film and covered by a Photoluminescent (PL) thin film. **Figure 1b** shows an axially extended photoluminescent layer on top of a metal film. **Figure 1c** shows an axially extended photoluminescent layer coated with metal film. **Figure 1d.1** shows a dielectric structure on top of glass substrate, which is not directly compatible with the disclosed method except if it is covered with photoluminescent layer and coated with metal film as in **Figure 1d.2** or coated with metal film that is covered with a photoluminescent layer as in **Figure 1d.3.**

**Figure 2** shows the distance-dependence of the photoluminescence lifetime for a thin film (dashed line) and an extended 3D layer (solid line), calculated for an example dye, Atto488 with a free space lifetime of 4 ns and a quantum yield of 0.8, isotropic orientation coefficient of 1.5 and a monochromatic emission at 520 nm on top of gold with a dielectric constant of -3.946 + 2.584i.

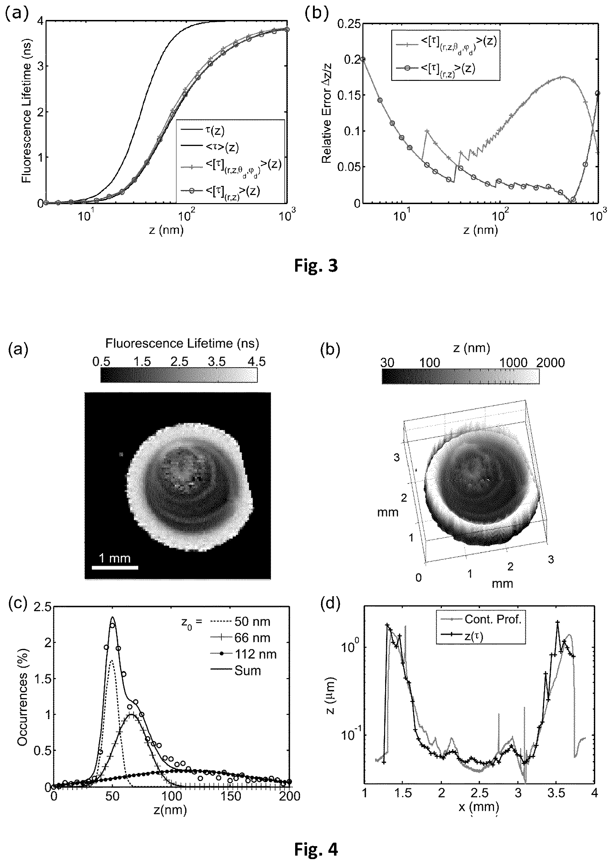

**Figure 3a** shows the distance dependent photoluminescence lifetimes considering the case shown on **Figure 2** both the thin film $\tau(z)$ (dashed line) and the extended layer (full line), compared to cases, where a Gaussian beam is considered $<[\tau]_{(r,z)}>(z)$ ('o' marker) and where in addition the dipole orientation is considered $<[\tau]_{(r,z,\theta d,\phi d)}>(z)$ ('+' marker). **Figure 3b** shows the relative distance variation between using or not Gaussian beam or both Gaussian plus dipole orientation compared to the nearfield quenching model shown in **Figure 2.**

Surprisingly, it is found that for an NA 1.45 objective and widefield illumination (no confocal geometry) the lateral effects can be mostly ignored and the much simpler formulation from **Equation (9)** can be used, which greatly simplifies the calculations.

**Figure 4** shows the topography of a dried droplet, **Figure 4(a)** FLIM image, **Figure 4(b)** 3D nanotopology determined via the contactless nearfield-based method presented in this disclosure, **Figure 4(c)** distribution histogram of thicknesses in the inner droplet part selected by a threshold of values below 200 nm, the circles follow the experimental thickness distributions and the solid black line is the sum of three thickness Gaussian distributions, which were obtained by fitting the overall distribution. **Figure 4(d)** thicknesses obtained via contact profilometry vs the contactless nearfield-based method.

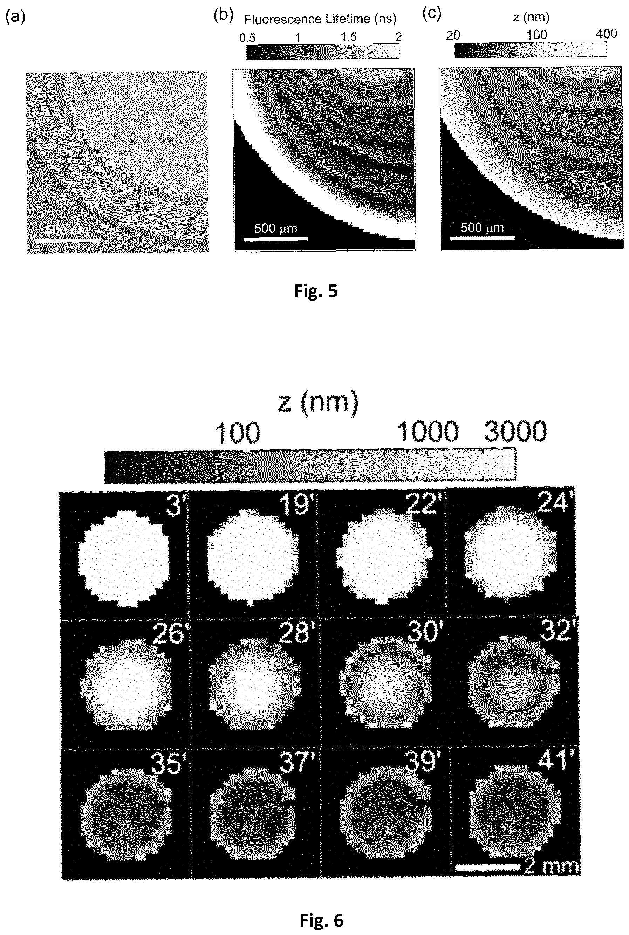

**Figure 5** shows the topography of a dried droplet at its edge, **Figure 5(a)** optical phase contrast microscopy, **Figure 5(b)** FLIM image, **Figure 5(c)** 3D nanotopology determined via the contactless nearfield-based method of the present disclosure.

**Figure 6** shows the droplet drying process followed via the contactless near field-based method of the present disclosure.

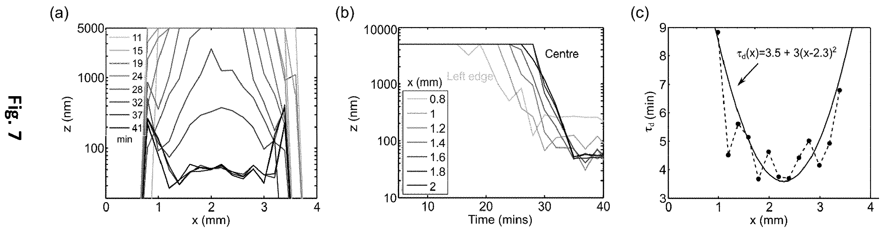

**Figure 7** shows the analysis of dynamic droplet drying. **Figure 7(a)** Log-scale height profiles of droplet at different drying time-stamps. **Figure 7(b)** Log-scale dynamic height change during drying process in different regions of the droplet (ranging from left edge to the centre). **Figure 7(c)** Fitted exponential decay coefficients $\tau_d$ (droplet drying lifetime), across the droplet length x. A quadratic curve-fitting of $\tau_d$ in correlation with the position x is shown in black.

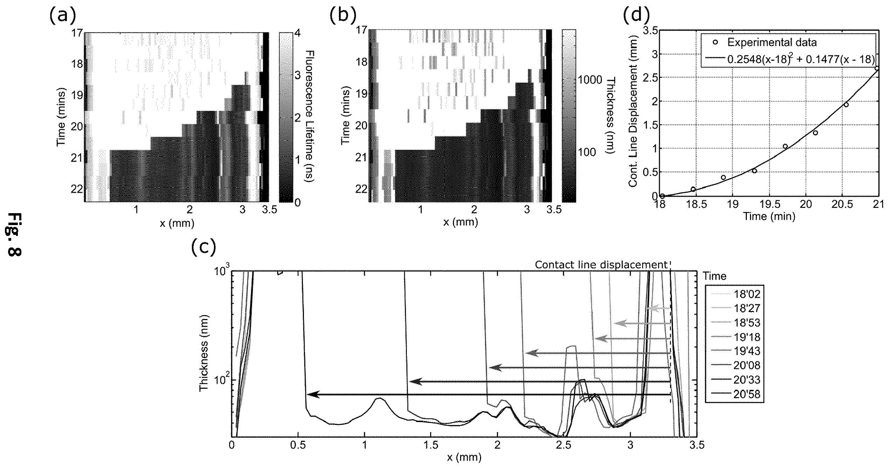

**Figure 8** shows the dynamic height over time in specific locations of the droplet with nanoscale resolution at the final drying stage of droplet which had a 3 $\mu l$ volume when deposited on a gold substrate. Measurements were taken as single line FLIM scans across the full droplet length across the droplet centre. **Figure 8(a)** Lifetime values determined for each line scan. **Figure 8(b)** The converted thickness values over time. **Figure 8(c)** Contact line displacement at selected times during the final drying process. **Figure 8(d)** Fitted quadratic curve of contact line displacement ($\Delta mm$) over selected time points during the final drying stage.

## DETAILED DESCRIPTION

The present disclosure relates to a contactless topographic characterization method based on nonradiative nearfield relaxion effects. The present disclosure relates in particular to contactless nearfield nano- and micro height and thickness measurements for three dimensional objects.

The present disclosure relates to a method based on a nearfield distance-dependent nonradiative relaxation effect to obtain absolute thickness measurement of an object.

The present disclosure is based on nearfield effects and uses time resolved photoluminescence single point and scanning microscopy to obtain the height of fluorescent materials and structures with nano-meter axial accuracy while at the same time swiftly providing easy-to-obtain 3D maps of nano-/micro-topological surfaces.

The method of the present disclosure addresses the challenges in current nano-topological methods by introducing a non-destructive contactless nanometrology technique.

An expression for the photoluminescence lifetime of the combined emission of emitters in a photoluminescent layer can be derived as follows: In the absence of an energy quencher (emitter in free-space), an emitter will relax from an excited energy state with the free-space decay rate $\Gamma_0$ which can be expressed as Equation (1)

$$\Gamma_0 = \Gamma_{NR} + \Gamma_R = \frac{1}{\tau_0} \tag{1}$$

where $\Gamma_{NR}$ is the non-radiative decay rate, $\Gamma_R$ is the radiative decay rate and $\tau_0$ is the free-space lifetime. Equation (2) expresses the decay rate in the presence of a quencher (or energy acceptor)

$$\Gamma(z) = \Gamma_0 + \Gamma_q(z) \tag{2}$$

where $\Gamma_q(z)$ is the distance-dependent quenching rate, i.e., the rate at which the energy is transferred non-radiatively from the molecules to the energy acceptor. The relative decay rate can thus be expressed as in Equation (3)

$$\frac{\Gamma(z)}{\Gamma_0} = 1 + \frac{\Gamma_q(z)}{\Gamma_0} \tag{3}$$

And thus, the relative lifetime becomes

$$\frac{\tau(z)}{\tau_0} = \left(1 + \frac{\Gamma_q(z)}{\Gamma_0}\right)^{-1} \tag{4}$$

, where the relative quenching rate $\Gamma_q(z)/\Gamma_0$ depends on the material and nature of the donor - acceptor interaction. Gaudreau et al. have derived an expression for the lifetime $\tau(z)$ for the case of a thin fluorescent film (thickness < 2 nm). For quenching layers with thicknesses between 2 and 50 nm:

$$\frac{\tau_m(z)}{\tau_0} = \left(1 + \frac{3v}{128\pi^3} \mathrm{Im}\left\{\frac{\epsilon_m - 1}{\epsilon_m + 1}\right\}\left(\frac{\lambda_0}{z}\right)^3\right)^{-1} \tag{5}$$

Where $v$ is an donor-acceptor orientation coefficient ($v = 1$ for parallel and $v = 2$ for perpendicular), $\epsilon_m$ is dielectric function of the non-radiative energy acceptor material and $\lambda$ is the emission wavelength. Unlike previous works, which relate to emitters confined in a thin film, an expression for the PL lifetime of emitters in a vertically extended layer was derived. Assuming a homogenous distribution of emitters along the axial direction, an ensemble of PL lifetime $\langle\tau\rangle$ of the layer can be considered as the superposition of the contributions of all emitters. The PL signal resulting from that superposition can be described as a sum of exponential decays of photoluminescence lifetime $\tau_i$

$$I(t) = \sum_{i=1}^{N} a_i \mathrm{e}^{-t/\tau_i}$$

(6)

, where i iterates over all the existing $N$ lifetimes along the z axis. The superposition photoluminescence lifetime $<\tau>$ can be calculated using the intensity coefficients $a_i$ as weighting factors

$$\langle \tau \rangle = \frac{\sum_{i=1}^{N} a_i \tau_i}{\sum_{i=1}^{N} a_i}$$

(7)

The number of photons collected from each z position is quantified by the z-dependent effective quantum yield $\Phi_{eff}(z_i)$, which, for every $i$ value is given by

$$\Phi_{\mathrm{eff}}(z_i) = \Phi_{\mathrm{eff}_i} = \int_0^\infty a_i \mathrm{e}^{-t/\tau_i} \mathrm{d}t = a_i \tau_i$$

(8)

The expression for $<\tau>$ is re-written as

$$\langle \tau \rangle(t) = \frac{\sum_{i=1}^{N} \Phi_{\mathrm{eff}}(z_i)}{\sum_{i=1}^{N} \Phi_{\mathrm{eff}}(z_i)/\tau(z_i)}$$

(9)

Which corresponds to the Riemann integration of the form

$$\langle \tau \rangle(t) = \frac{\int_0^t \phi_{eff}(z)\mathrm{d}z}{\int_0^t \phi_{eff}(z)/\tau(z)\,\mathrm{d}z}$$

(10)

Where the distance-dependent effective quantum yield $\phi_{eff}(z) = (\phi_0/\tau_0)\tau(z)$ of the emitters is used as a weighting factor of the ensemble lifetime. Analytical solutions for the integral can be obtained provided that the analytical expression of $\tau(z)$ is available. However, the numerical integration form can be used for any form of $\tau(z)$, independently of the materials and nature of interaction. Furthermore, it can very easily be implemented in any data analysis framework. It has been found that a numerical integration resolution dz = 1 nm provides very good approximations to the analytical results.

**Figure 2** shows a plot of $\tau(z)$ (dashed line) as formulated by Gaudreau et al. for thin fluorescent layers at a distance z from a gold surface (Equation (5)) in comparison with the modified ensemble $<\tau>$(t) (solid line) according to the disclosure for axially extended photoluminescent layers of thickness t (**Equation (9)**). As can be seen in the plot, the integration over the layer thickness changes the sensing range from about 10 - 100 nm to 20 - 2000 nm, thus increasing the dynamic range of the sensor by one order of magnitude.

Per default it is assumed an isotropic and completely homogeneous distribution of emitters in the sample. respectively. However, the resulting ensemble lifetimes after integration over z may be subject to modifications in case of preferred emission orientation or emitter concentration inhomogeneity in the axial direction of the sample. The effect of beam shape and dye emission orientation can be taken into consideration using a collection efficiency ponderation

$$\Phi_{ci}(z) = \Phi_{eff}(z)\,\eta_b(r,z)\iint \eta_d(\theta_d,\phi_d)\,d\theta_d d\phi_d$$

(11)

where $\eta_b(r,w)$ is the beam shape-dependent collection efficiency and $\eta_d(\theta_d,\phi_d)$ is the projection between the emitter orientation and the beam focus.

**Figure 3a** shows the plots of the thin film $\tau(z)$ (dashed line) together with the extended layer calculated with no collection efficiency ponderation $<\tau>(z)$ (solid line), direction integrated (confocal geometry) $<[\tau]_{(r,z,\theta d,\phi d)}>(z)$ ('+' marker) and using only the Gaussian beam efficiency ponderation $<[\tau]_{(r,z)}>(z)$ ('o' marker). **Figure 3b** shows the relative distance variation between using no efficiency correction and the other two predictions.

Surprisingly, it is found that for an NA 1.45 objective and wide field illumination (no confocal geometry), the lateral effects can mostly be ignored and the much simpler formulation from **Equation (9)** can be used. This greatly simplifies the calculations.

In an embodiment, to analyze the complex 3D nanotopology of a dried droplet, the model in **Equation (9)** was used to convert photoluminescence lifetime values into layer thicknesses. While the PL microscopy has already been used to observe the dynamic behaviour of drying droplets, in this disclosure, dynamic 3D maps of the patterns formed during the evaporation, particularly, at the final drying stages, were obtained. **Figure 4** shows the FLIM image of a dried 3 μl droplet and respective converted thickness map analysis.

As shown in **Figure 4a** shows the FLIM image of a dried droplet, where the photoluminescence lifetime values obtained vary from 3.8 ns at the droplet edge down to approximately 0.5 ns towards the center of the droplet. The displayed patterns correspond to those commonly found in sessile droplets. After drying, the majority of the dyes become accumulated at the periphery in ring-like shapes, while the remaining dyes are distributed in distinct inner rings that converge to an off-centered position. According to the derived model **Equation (9),** these values can be correlated with thickness variations from about 1.5 μm to 30 nm, as it can be seen in the converted 3D log-scale thickness map in **Figure 4b.** Characteristic features such as contact ring at the edge with the height of about 1500 nm, inner film with a few tens of nanometer thickness and asymmetric air attack-caused inner features, with very low heights ranging from 50 to 100 nm can be identified. The thickness distribution values below 200 nm, corresponding mostly to the inside part of the dried pattern can be found in **Figure 4c.** A single-line thickness profile across the droplet is compared with the contact profilometry results (**Figure 4d**).

**Figure 5** shows higher resolution characterization of the same dried droplet obtained with different techniques: optical phase microscopy image (**Figure 5a**), FLIM (**Figure 5b**) and the method of the present disclosure (**Figure 5c**). Interestingly, the method of the present disclosure allows a clear identification of common contact line morphology features. The multi-ring patterns show several rings with widths varying from 80 μm to 300 μm and heights varying from 80 nm to more than 400 nm at the rim (**Figure 5c**). Multi-ring pattern has been explained in previous works to be the result of stick-slip motion of the contact line. The broader and thicker ring at the outer edge could be attributed to convection flow towards the droplet contact line in order to replace the evaporated liquid at the border and consequently deposition of more solute dyes in that region. Such migration is accelerated with the influence of well-known Marangoni flow inside the droplet, specifically with the presence of polyvinyl alcohol (PVA) in this study acting as a surfactant.

The two types of fluidic flows, Marangoni and capillary, occurring inside a drying droplet are the result of hydrodynamic and thermodynamic instability induced by the evaporation. The outward capillary flow which directs the suspended dyes towards the droplet edge competes with the circulating Marangoni flow during evaporation.

At the initial drying stages, the capillary flow pushes the dyes to the droplet edge. In the presence of surfactant and depending on the surfactant concentration, the local Marangoni flow increases which affects the droplet surface tension. Equal magnitudes of two competitive forces of capillary and Marangoni flows at the droplet edge causes local Marangoni vortices near the contact edge, which generates the swirling motion rather than the back-and-forth motions, pulling and redistributing the dyes upwards and inwards by swirling flow. It is known that the Marangoni flow is weak in water droplets. Also, the droplet contact angle decreases with decreasing volume, until the critical receding contact angle is reached, at which point the unbalanced forces inside the droplet causes the contact line to recede inwards and pin again to the surface. The repetition of such stick-slip motion forms a multi-ring pattern.

In an embodiment, to demonstrate the possibility of acquiring in situ dynamic 3D topologies at the liquid/solid interface, the method of the present disclosure was applied to the drying process of a droplet by performing time-lapse imaging.

In an embodiment, to measure the droplet profile during evaporation process, the droplet was scanned every two minutes using the method of the present disclosure.

**Figure 6** shows the evaporation process of the whole droplet in time series, calculated through lifetime converted to z position. At early evaporation stages, the dyes are distributed across long distances (> 3 $\mu$m) from the nonradiative energy acceptor sensing surface. After 19 minutes, they begin to be confined closer to the surface around the droplet periphery. After 24 minutes, a ring-like edge is formed as the droplet is pinned to the surface. The contact ring grows while the droplet recedes inwards. Although the pinned contact line causes the droplet radius to remain constant, the thickness at the centre decreases in time.

After 30 minutes, the droplet recedes fast, while a pronounced thickness reduction takes place, reaching far below 100 nm at the droplet centre. After 37 minutes, the droplet is completely dry, and does not change at longer observation times.

For comparison, the droplet profile and height during the drying process are measured using a commercial droplet shape analyzer through 20 s time-lapse intervals. The results show the droplet profile and height evolution up to 26 min. After 26 minutes, the analyzer tool is no longer able to detect droplet height.

Whereas other non-invasive classical techniques are typically diffraction-limited, the sensitivity range of the method of the present disclosure allows dynamic behaviours of late droplet drying stages to be observed from about 30 to 3000 nm.

In an embodiment, a more detailed study of the drying dynamics by analysing the droplet center line profiles was performed.

In **Figure 7a** the droplet height displacement during the evaporation process is given at various length positions across the droplet radium (from left edge to center). 11 minutes after deposition, the thickness values decrease to the sensing range of the method of the present disclosure at the left edge and continues to decrease until it stagnates after 24 minutes. In the initial moments after deposition, the fluorophores are located very far from the nonradiative energy acceptor surface do not experience near-field energy transfer to the gold substrate, and thus display the free-space lifetime. Only after sufficient thickness reduction due to the evaporation do the dyes become confined within the sensing rage of the method of the present disclosure and experience a photoluminescence lifetime reduction. It should be noted that the sensing range of the MIET-FLIM technique depends on the substrate material. For gold, the sensing range of the method of the present disclosure reaches at the very maximum of up to 5 $\mu$m from the gold substrate, any thickness beyond is not likely to be determined.

Accumulation of dyes near the contact line in the presence of surfactant, creates a stagnation zone where the Marangoni flow overcomes the capillary flow. This results in the inflection point occurring after 24 minutes, which is associated with changes to the droplet curvature. Further, at the inflection point, the contact line displacement occurs and contact rings form into which dyes deposit. In theoretical and scientific studies on droplet dynamic behaviour, an accurate characterization of the inflection point is important to distinguish the apparent contact line from the real contact line. Those studies suffer from the lack of proper experimental and imaging techniques to observe such phenomena.

**Figure 7b** shows the thickness values in each point decreasing exponentially over time (linear decays in y-log scale). The drying dynamics was characterized by performing exponential curve-fittings of the droplet thickness z(x,t) over time across different x positions (plotted in **Figure 7c**)

$$z(x,t) = z_0(x)e^{-t/\tau_d(x)}$$

$$(12)$$

where z0(x)=z(x,t=0) is the initial thickness at each position, t is the time in minutes and $\tau$d(x) is what is defined as the position-dependent droplet drying lifetime. The obtained values of $\tau$d(x), are plotted in solid line in **Figure 7c.** It was found that $\tau$d(x) shows quadratic behavior (see black curve in **Figure 7c**)

$$\tau_d(x) = \tau_{d,0} + a(x - x_0)^2$$

$$(13)$$

Where $\tau$d,0 = 3.5 min is the drying lifetime at droplet centre, x0 = 2.3 mm is the position of the droplet centre and a = 3 min/mm is a scaling factor. These results indicate that the central part of the droplet dries at a much faster rate (shorter drying lifetime) than the edges.

In an embodiment, as a complementary analysis, a single line scanning across the centre of a drying droplet with higher lateral and temporal resolutions was performed (see **Figure 8**). Such detailed understanding of the drying process and contact line dynamics provides relevant insights towards drop-on-demand applications with specific evaporation rates. **Figure 8a** shows the FLIM scans taken between 17 minutes and 22 minutes after deposition, with time interval of 20 seconds per frame. **Figure 8b, 8c.** show the converted thickness values obtained from the method of the present disclosure in image and line-plot representations, respectively. The FLIM result show photoluminescence lifetime equal to the free-space lifetime of ATTO488 across the entire droplet during the initial 18 minutes of the evaporation process. Afterwards, a photoluminescence lifetime reduction is observed, indicating a contact line receding from the right edge towards the left.

At the final stage of drying, the contact line position extracted from the scans obtained from the method of the present disclosure is plotted over time as shown in **Figure 8d.** The contact line receding from one edge to the other takes about 3 minutes and its behaviour can be described using a quadratic curve fitting. The fit allows an increasing displacement velocity varying between 2 to 30 $\mu$lm/s at drying times of 18 and 21 minutes to be determined. An experimental repetition displayed similar results.

Recent studies dedicated to the final droplet drying stage dynamics divided the final stage into several substages, where increasing contact line velocities are also observed. However, the lower resolution offered by the previously used interference image technique limited the minimum observable thicknesses to 300 nm for 2 $\mu$l water droplets on a fluopolymer-coated glass substrate. Using the method of the present disclosure, the contact line transition could be observed for a 3 $\mu$l droplet of ATTO488-doped water/PVA with an axial resolution reaching down to tens of nanometers, which far exceeds conventional droplet shape analyser tools and more recent optical imaging techniques.

In an embodiment, sample preparation was performed using glass coverslips (Ø 50 mm, #1.5 $\mu$m thick, Menzel-Gläser) coated with a 20 nm gold layer using a multi-target ultra-high vacuum confocal sputtering tool (Kenosistec). Fluorescence molecule of Atto488 with 80% quantum yield is excited at 480 nm. The free-space lifetime value of the fluorophores at the emission peak of 520 nm is 4.1 ns. A droplet of 3 $\mu$l of 10 $\mu$M Atto488 (Sigma-Aldrich)-doped 0.1% v/v PVA/water (MowiolTM 4-88, Mw ~ 31,000, Sigma-Aldrich, refractive index of 1.5) is placed on the gold-coated glass coverslip.

In an embodiment, FLIM microscopy was performed. A custom-built FLIM microscope based on an inverted RM21 microscope (MadCityLabs) is used. A picosecond pulsed laser at 467 nm (PLP-10, 80 picosecond pulse length, 50 MHz repetition rate, Hamamatsu) is used as the excitation source. The beam is passed through a 470 nm clean-up filter (470FS10-25, Thorlabs) in order to suppress the luminescence background. After passing through the spatial filter, a pair of plano-concave lenses consisting of a f=40 mm achromatic doublet (AC254-040-A, Thorlabs) and a f=250 mm achromatic doublet (AC254- 250-A, Thorlabs) is used to expand the beam and after reflecting from a 480LP dichroic mirror (F38-482, AHF Analysentechnik), the laser beam is delivered and focused onto the back entry of the oil immersion objective (100x , NA: 1.45, 0.17 WD 0.13, Nikon CFI plan APO) The collected emitted signals from the excited fluorophore sample is passed through 2 x 473 nm long-pass filter (F76-473, AHF Analysentechnik) and a lens focusing onto the 50 $\mu$m active detection area of the avalanche photodiode (APD) detector (PD50CTD, Micro Photon Devices). The sample is scanned using a combined micro- and piezo closed loop nanoscanner system (MicroStage Series & NanoLPS200, MadCityLabs). Time correlated single photon counting (TCSPC) is implemented using a single photon counting card (SPC130, Becker&Hickl GmbH). LABVIEW is used for instrument control.

In an embodiment, evaporation dynamics are measured with scans performed every 3 minutes starting right at the time of droplet deposition and the images are taken over areas of 4000 $\mu$m × 4000 $\mu$m with 20 × 20 pixels and 0.01 second of the pixel dwell time. After the completion of the droplet drying, the image of the dried pattern is obtained via scanning over an area of 4000 $\mu$m × 4000 $\mu$m and 100 × 100 pixels with 0.05 second. The single line scans are obtained along a distance of 4000 $\mu$m across the droplet with 100 ×1 pixels and 0.1 sec pixel dwell time.

In an embodiment, fluorescence lifetimes are calculated using the multi-exponential fitting algorithms developed by Enderlein et al. and using the deconvolution of experimentally measured instrument response function (IRF). The algorithm was integrated into a MATLAB toolbox with GUI developed by the Ultrafast Bio- and Nanophotonics group at INL mainly by Ricardo Adão. The IRF was recorded on coverglass with bare gold layer outside the droplet area. The conversation into nanoscale thickness is performed using Equation 7 to convert the weighted average fluorescence lifetime yielded by the multi-exponential fitting.

In an embodiment, inverted phase contrast microscopy was performed. A Nikon TS100-F inverted phase contrast microscope with a 2x plan achromatic objective (NA: 0.06, WD 7.5, Nikon), was used to characterize the dried droplet.

In an embodiment, profilometry was performed. The profile height of the dried droplet is obtained by KLA Tencor P-16 contact profiler (USA), using diamond stylus tip of 2 $\mu$m radius size moved at a rate of 100 $\mu$m/sec with the applied force of 2 mg.

In an embodiment, a comparison method to obtain the droplet profile was performed. The drop shape analyser (DSA 100) from KRUSS GmbH (Hamburg, Germany) is used as a comparison method to obtain the droplet profile. The droplet of 3$\mu$l of 10 $\mu$M Atto488-doped 0.1% v/v PVA/water was placed on top of gold coated glass coverslip and the images were recorded using a CCD camera over the evaporation period. Droplet information, such as droplet height and contact angle were automatically computed using the tangent method and obtained via DSA3 software interface.

The above described embodiments are combinable.

**Claims**

1.   Method for direct measurement of thickness or topography of a structure or layer in respect of a nearfield photoluminescence quenching layer, by using time-resolved photoluminescence microscopy lifetime imaging, for measuring quenching of photoluminescence lifetime caused by nonradiative energy transfer, from the photoluminescent layer, acting as an energy donor layer, to the quenching layer, acting as nonradiative energy acceptor layer, comprising the steps of:

   illuminating a portion of a sample having a quenching layer and a photoluminescent layer with variable-thickness, with an excitation light source for obtaining photoluminescence emission,
   measuring the photoluminescence emission for obtaining the time-resolved photoluminescence and determine the photoluminescence lifetime from the time-resolved photoluminescence;
   determining the thickness of the photoluminescent layer from the determined photoluminescence lifetime.

2.   Method according to claim 1 whereby the thickness of the photoluminescent layer is determined by:

$$\langle\tau\rangle(t) = \frac{\int_0^t \Phi_{\text{eff}}(z)\,dz}{\int_0^t \Phi_{\text{eff}}(z)/\tau(z)\,dz}$$

   wherein t is the thickness of the photoluminescent layer to be determined, z is a thickness-axis distance across the photoluminescent layer, $\langle\tau\rangle(t)$ is the obtained photoluminescence lifetime from the measured photoluminescence emission, $\tau(z)$ is the photoluminescence lifetime as a function of z for a thin photoluminescent layer and $\Phi_{\text{eff}}(z)$ is the effective quantum-yield as a function of z.

3.   Method according to claim 2 whereby the effective quantum-yield $\Phi_{\text{eff}}(z)$ is obtained by:

$$\Phi_{\text{eff}}(z) = \Phi_0 \frac{\tau(z)}{\tau_0}$$

   wherein, $\Phi_0$ is the free-space quantum yield of the emitters, and $\tau_0$ is the free-space photoluminescent lifetime of the emitters.

4.   Method according to any of the previous claims 1-3 wherein measuring of the photoluminescence emission is carried out in single-point, image scanning or widefield collection by time-domain measurement or time-gated measurement or frequency-domain measurement.

5.   Method according to any of the previous claims 1-4 comprising the preceding step of providing the sample with the quenching layer and the photoluminescent layer with variable-thickness.

6.   Method according to any of the previous claims 1-5 wherein measuring the photoluminescence emission for obtaining the photoluminescence lifetime is carried out at a single point on the sample, for determining the thickness of the photoluminescent layer on the single point, or carried out at a scanning line along the sample, for determining the thickness of the photoluminescent layer along the scanning line, or carried out on a scanning area of the sample, for determining the thickness of the photoluminescent layer within the scanning area, or carried out on a widefield area on the sample, for determining the thickness of the photoluminescent layer on that widefield area.

7.   Method according to any of the previous claims 1- 6 wherein the method is preceded by an instrument response function deconvolution step, wherein the instrument is used to measure the photoluminescence emission.

8.   Method according to any of the previous claims 1-7 comprising the step of adding photoluminescence properties to the structure of which the thickness is to be measured, wherein the photoluminescent layer comprises a photoluminescent emitter, chromophore, quantum dot, perovskite, or light-emitting nanostructure.

9. Method according to any of the previous claims 1-8 comprising the preceding step of depositing a quenching layer on a photoluminescent layer.

10. Method according to any of the previous claims 1-9 wherein the quenching layer is a metal layer, a conductive two-dimensional material, transparent conductive oxides, metal metastructures, metal alloys, ceramic based metamaterials, or combinations thereof.

11. Method for indirect measurement of the topography of a non-luminescent dielectric layer comprising the steps of:

depositing a variable-thickness photoluminescent layer, followed by a quenching layer, onto the non-luminescent dielectric layer;
wherein the quencher layer forms a flat surface on top of the photoluminescent layer;
measuring the thickness of the photoluminescent layer in respect of the quenching layer according to the method of any of the previous claims 1-10;
obtaining the topography of the non-luminescent dielectric layer using the measured thickness of the photoluminescent layer.

12. Method for indirect measurement of the thickness of a non-luminescent dielectric layer comprising the steps of:

depositing a variable-thickness photoluminescent layer, followed by a quenching layer, onto the non-luminescent dielectric layer;
wherein the quencher layer forms a flat surface on top of the photoluminescent layer;
measuring the thickness of the photoluminescent layer in respect of the quenching layer according to the method of any of the claims 1-10;
obtaining the thickness of the non-luminescent dielectric layer by subtracting the measured thickness of the photoluminescent layer from a total thickness comprising the photoluminescent layer and the non-photoluminescent dielectric layer.

13. Method for indirect measurement of topography of a non-luminescent dielectric layer comprising the steps of:

depositing a quenching layer followed by a variable-thickness photoluminescent layer, onto the non-luminescent dielectric layer;
wherein the photoluminescent layer forms a flat surface on top of the quencher layer;
measuring the thickness of the photoluminescent layer in respect of the quenching layer according to the method of any of the claims 1-10;
obtaining the topography of the non-luminescent dielectric layer using the measured thickness of the photoluminescent layer.

14. Method for indirect measurement of thickness of a non-luminescent dielectric layer comprising the steps of:

depositing a quenching layer followed by a variable-thickness photoluminescent layer, onto the non-luminescent dielectric layer;
wherein the photoluminescent layer forms a flat surface on top of the quencher layer;
measuring the thickness of the photoluminescent layer in respect of the quenching layer according to the method of any of the claims 1-10;
obtaining the thickness of the non-luminescent dielectric layer by subtracting the measured thickness of the photoluminescent layer and the quenching layer thickness from a total thickness comprising the photoluminescent layer and the non-luminescent dielectric layer.

15. Device comprising an electronic data processor and non-transitory storage media comprising computer program instructions for implementing a method for obtaining a direct measurement of thickness of a photoluminescent layer in respect of a quenching layer, by using photoluminescence microscopy lifetime imaging, for measuring quenching of photoluminescence lifetime caused by nonradiative energy transfer, from the photoluminescent layer, acting as an energy donor layer, to the quenching layer, acting as nonradiative energy acceptor layer, the computer program instructions including instructions which, when executed by the processor, cause the processor to carry out the steps of:

collecting a synchronisation signal from an excitation light source for illuminating the sample for obtaining photoluminescence emission,
measuring the synchronized photoluminescence emission for obtaining the time-resolved photoluminescence and determine the photoluminescence lifetime from the time-resolved photoluminescence;
determining the thickness of the photoluminescent layer from the determined photoluminescence lifetime.

**Fig. 1**

**Fig. 2**

Fig. 3

Fig. 4

Fig. 5

Fig. 6

**Fig. 7**

Fig. 8

Europäisches
Patentamt

European
Patent Office

Office européen
des brevets

# EUROPEAN SEARCH REPORT

Application Number

EP 20 20 4202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | RICARDO M R ADÃO ET AL: "Graphene setting the stage: tracking DNA hybridization with nanoscale resolution", 2D MATERIALS, vol. 6, no. 4, 30 September 2019 (2019-09-30), page 045056, XP055736967, DOI: 10.1088/2053-1583/ab41e0 * the whole document * | 1-15 | INV. G01B11/06 G01B9/04 G01B11/24 |
| A | BERNDT MICHAEL ET AL: "Axial Nanometer Distances Measured by Fluorescence Lifetime Imaging Microscopy", NANO LETTERS, vol. 10, no. 4, 10 March 2010 (2010-03-10), pages 1497-1500, XP055795056, US ISSN: 1530-6984, DOI: 10.1021/nl100593x Retrieved from the Internet: URL:https://pubs.acs.org/doi/pdf/10.1021/nl100593x> * the whole document * | 1-15 | |
| T | GHAELI IMA ET AL: "CLeANFIT - Contact-Less Axial Nearfield-Based Fluorescence Imaging Topography: A Method for 3D Micro- and Nanotopography Characterization", ADVANCED MATERIALS INTERFACES, vol. 7, no. 22, 5 October 2020 (2020-10-05), page 2000581, XP055795413, DE ISSN: 2196-7350, DOI: 10.1002/admi.202000581 Retrieved from the Internet: URL:https://onlinelibrary.wiley.com/doi/full-xml/10.1002/admi.202000581> | | TECHNICAL FIELDS SEARCHED (IPC) G01B |

The present search report has been drawn up for all claims

| Place of search | Date of completion of the search | Examiner |
|---|---|---|
| Munich | 15 April 2021 | Stanciu, C |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A.I. CHIZHIK ; J. ROTHER ; I. GREGOR ; A. JANSHOFF ; J. ENDERLEIN.** Metal-induced energy transfer for live cell nanoscopy. *Nat. Photonics,* 2014, vol. 8, 124-127
- **E. FIGUEIRAS ; O.F. SILVESTRE ; T.O. IHALAINEN ; J.B. NIEDER.** Phasor-assisted nanoscopy reveals differences in the spatial organization of major nuclear lamina proteins. *Biochim. Biophys. Acta - Mol. Cell Res.,* 2019, vol. 118530, https://doi.org/10.1016/j.bbamcr.2019.118530
- **R.R.M.A. ; R.C. ; E.F. ; P.A. ; J.B. NIEDER.** *Graphene setting the stage: Tracking DNA hybridization with nanoscale resolution, 2D Mater,* 2019, http://iopscience.iop.org/10.1088/2053-1583/ab41e0
- **L. GAUDREAU ; K.J. TIELROOIJ ; G.E.D.K. PRAWIROATMODJO ; J. OSMOND ; F.J.G. DE ABAJO ; F.H.L. KOPPENS ; F.J. GARCIA DE ABAJO ; F.H.L. KOPPENS.** Universal distance-scaling of nonradiative energy transfer to graphene. *Nano Lett.,* 2013, vol. 13, 2030-2035